# EUROPEAN PATENT APPLICATION

(11) **EP 4 826 679 A2**
(43) Date of publication of application: **21.10.2026**
(21) Application number: 26203977.9
(22) Date of filing: 09.09.2026
(51) Int. Cl.: G06V 20/52

(54) **METHOD AND APPARATUS FOR MONITORING ABNORMAL STATE OF SCENE, AND READABLE STORAGE MEDIUM**

(30) Priority: 13.08.2026 SG 10202602817
(71) Applicant: XG TECH PTE. LTD., Singapore 179098 (SG)
(72) Inventor: LIN, Wei, 179098 Singapore (SG); HUANG, Jingchang, 179098 Singapore (SG)
(74) Representative: Patentanwälte Magenbauer & Kollegen Partnerschaft mbB

(57) **Abstract**

This disclosure provides a method, an apparatus for monitoring an abnormal state of a scene, and a readable storage medium. The method includes: collecting (S100) first scene information of a target scene; comparing (S200) the first scene information with reference scene information of the target scene to obtain an information difference value; in a case where the information difference value is greater than or equal to a difference threshold, determining (S300) an abnormal state exists in the target scene; collecting (S400) second scene information related to the abnormal state, wherein the second scene information includes scene information of the target scene collected within a first time period prior to the current time period; determining (S500) current credibility of the abnormal state based on the first scene information and the second scene information; processing (S600) the abnormal state in a case where the current credibility is greater than a credibility threshold.

## Description

### TECHNICAL FIELD

The present disclosure relates to the technical field of smart home, and in particular, to a method and an apparatus for monitoring an abnormal state of a scene, and a readable storage medium.

### BACKGROUND

With rapid popularization of smart home devices, during use of the smart home device, the smart home device may be used to detect an abnormal state occurring in a home scene. When an abnormal state is detected, the smart home device can also be used to issue alert information to notify a user.

However, in actual operation, the smart home device has relatively low accuracy in detecting the abnormal state, and phenomena such as false reports and misreports frequently occur, affecting user experience.

### SUMMARY

According to a first aspect of the present disclosure, a method for monitoring an abnormal state of a scene is provided, including:
collecting first scene information of a target scene, wherein the first scene information includes scene information of the target scene that is collected within a current time period;
comparing the first scene information with reference scene information of the target scene to obtain an information difference value, wherein the reference scene information is pre-stored scene information corresponding to the target scene when the target scene is in a normal state;
in a case where the information difference value is greater than or equal to a difference threshold, determining that an abnormal state exists in the target scene;
collecting second scene information related to the abnormal state, wherein the second scene information includes scene information of the target scene that is collected within a first time period prior to the current time period;
determining current credibility of the abnormal state based on the first scene information and the second scene information; and
processing the abnormal state in a case where the current credibility is greater than a credibility threshold.

According to a second aspect of the present disclosure, an apparatus for monitoring an abnormal state of a scene is provided, including:
a collection module, configured to collect first scene information and second scene information of a target scene, where the first scene information includes scene information of the target scene that is collected within a current time period, and the second scene information includes scene information of the target scene that is collected within a first time period prior to the current time period;
a memory module, configured to store reference scene information, wherein the reference scene information is pre-stored scene information corresponding to the target scene when the target scene is in a normal state;
a comparison module, configured to compare the first scene information with the reference scene information, to obtain an information difference value;
a first determining module, configured to determine, in a case where the information difference value is greater than or equal to a difference threshold, that an abnormal state exists in the target scene;
a second determining module, configured to determine current credibility of the abnormal state based on the first scene information and the second scene information; and
a processing module, configured to process the abnormal state in a case where the current credibility is greater than a credibility threshold.

According to a third aspect of the present disclosure, a computer readable storage medium is provided. The storage medium stores a computer program, and the computer program is used for implementing the method for monitoring an abnormal state of a scene according to the first aspect described above.

According to a fourth aspect of the present disclosure, an electronic device is provided. The electronic device includes: a processor; and a memory, configured to store instructions executable by the processor, where the processor is configured to read the executable instructions from the memory, and execute the executable instructions to implement the method for monitoring an abnormal state of a scene according to the first aspect.

According to the technical solutions provided in the present disclosure, a state of the target scene is determined based on the information difference value between the first scene information and the reference scene information of the target scene; in a case where it is determined that an abnormal state exists in the target scene, the second scene information related to the abnormal state within the first time period prior to the current time period is collected for the target scene; and the current credibility of the abnormal state of the target scene is further determined by combining the first scene information and the second scene information. Processing, such as alerting or intervention, is performed on the abnormal state of the target scene merely in a case where the current credibility is greater than the credibility threshold. In this way, accuracy of detecting the abnormal state in the target scene can be effectively improved, thereby reducing occurrence of phenomena such as false reports and misreports, and improving user experience.

### BRIEF DESCRIPTION OF THE DRAWINGS

By describing embodiments of the present disclosure more detailed with reference to accompanying drawings, the foregoing and other objectives, features, and advantages of the present disclosure will become more apparent. The accompanying drawings are used to provide further understanding of the embodiments of the present disclosure, and constitute a part of the specification. Together with the embodiments of the present disclosure, the accompanying drawings are used to explain the present disclosure, and do not constitute a limitation on the present disclosure. In the accompanying drawings, same reference numerals generally represent same components or steps.
FIG. 1 is a block diagram of an architecture of a system for monitoring an abnormal state of a scene according to an exemplary embodiment of the present disclosure;
FIG. 2 is a schematic flowchart of a method for monitoring an abnormal state of a scene according to an exemplary embodiment of the present disclosure;
FIG. 3 is a schematic flowchart of a method for monitoring an abnormal state of a scene according to another exemplary embodiment of the present disclosure;
FIG. 4 is a schematic flowchart of a method for monitoring an abnormal state of a scene according to still another exemplary embodiment of the present disclosure;
FIG. 5 is a schematic flowchart of a method for monitoring an abnormal state of a scene according to yet another exemplary embodiment of the present disclosure;
FIG. 6 is a schematic flowchart of a method for monitoring an abnormal state of a scene according to still yet another exemplary embodiment of the present disclosure;
FIG. 7 is a schematic flowchart of a method for monitoring an abnormal state of a scene according to a further exemplary embodiment of the present disclosure;
FIG. 8 is a schematic flowchart of a method for monitoring an abnormal state of a scene according to a still further exemplary embodiment of the present disclosure;
FIG. 9 is a schematic diagram of a structure of an apparatus for monitoring an abnormal state of a scene according to an exemplary embodiment of the present disclosure; and
FIG. 10 is a schematic diagram of a structure of an electronic device according to an exemplary embodiment of the present disclosure.

DETAILED DESCRIPTION OF THE EMBODIMENTS

Exemplary embodiments of the present disclosure are described below in detail with reference to accompanying drawings. Obviously, the embodiments described are merely some, rather than all of embodiments of the present disclosure. It should be understood that the present disclosure is not limited by the exemplary embodiments described herein.

It should be noted that, unless otherwise specifically stated, the relative arrangement of components and steps, numerical expressions, and numerical values set forth in these embodiments do not limit the scope of the present disclosure.

### Application overview

With rapid popularization of smart home devices, smart home devices such as a home camera, a robotic vacuum cleaner, a smart door lock, a smart speaker, a pan-tilt device, a millimeter-wave radar, an environmental sensor, smart lighting, and a pet feeder have been widely deployed in home scenes. During use of the smart home device, components such as the environmental sensor or the camera integrated in the smart home device may be used to detect an abnormal state occurring in a home scene. When an abnormal state is detected, the smart home device may also be used to issue alert information to notify a user.

For example, when detecting a phenomenon such as smoke, water accumulation on the floor, or a door opening automatically in a home scene, the smart home device may issue corresponding alert information to notify the user that an abnormal state exists in the home scene.

However, in related technologies, smart home devices rely on components such as sensors and cameras to collect data and images, so as to determine an abnormal state based on the data and the images. To be specific, the smart home device can only determine, based on current data and images, whether a current state of a scene is abnormal, but cannot understand a formation process of the current state of the scene, resulting in misjudgment of the abnormal state of the scene.

For example, when detecting water on the floor, the smart home device may determine that the current scene is in an abnormal state. However, there are multiple causes for water on the floor, for example, a cup being tilted or a cup falling over. And the causes for a cup being tilted may also include multiple kinds, for example, a person shaking the cup while holding it causing the cup to tilt, or a pet running and knocking over the cup causing the cup to tilt, which is caused by abnormal reasons, and it is also possible that when a person needs to clean the floor, they deliberately tilt the cup, or a child playing deliberately tilts the cup, and other reasons. The smart home device can only detect a final result of water on the floor, and thus issue an alert; but cannot understand an entire change chain that causes the phenomenon of water on the floor. This results in false reports and misreports of abnormal states occurring in some cases, affecting user experience.

To resolve the foregoing technical problem, the present disclosure provides a method for monitoring an abnormal state of a scene, which may be applied to smart home devices such as a home camera, a robotic vacuum cleaner, a smart door lock, a smart speaker, a pan-tilt device, a millimeter-wave radar, an environmental sensor, smart lighting, and a pet feeder. During operation of the smart home device, first scene information of a target scene may be collected by components such as an integrated environmental sensor or camera. In other words, scene information of the target scene within a current time period is collected in a real-time manner.

Subsequently, the smart home device may further compare, through a processor, the collected first scene information with corresponding pre-stored reference scene information indicating that the target scene is in a normal state, so as to calculate an information difference value between the first scene information and the reference scene information. The information difference value may be used to quantify a degree of deviation between the first scene information of the current target scene and the reference scene information corresponding to the target scene in a normal state, with a larger value representing a more severe deviation of the scene from the normal state. It may be understood that, since the reference scene information is used to indicate scene information when the target scene is in a normal state, if the information difference value between the first scene information and the reference scene information is too large, it indicates that an abnormal state exists in the current target scene. To be specific, in a case where it is determined that the information difference value between the first scene information and the reference scene information is greater than or equal to a difference threshold, it may be determined that an abnormal state exists in the current target scene.

If the smart home device detects that an abnormal state exists in the current target scene, second scene information related to the abnormal state may be collected. It should be noted that the second scene information may include scene information of the target scene that is collected within a first time period prior to the current time period. In other words, the first scene information collected within the current time period is used to analyze whether an abnormal state exists in the target scene within the current time period. Moreover, when it is determined that an abnormal state exists within the current time period, the second scene information within the first time period prior to the current time period may be retrieved to analyze a cause of formation of the abnormal state, so as to avoid misjudgment of the abnormal state of the target scene caused by relying merely on the first scene information within the current time period.

It may be understood that the second scene information is scene information related to the detected abnormal state. Therefore, during collection of the second scene information, a smart home device related to the abnormal state may first be determined, and then data within the first time period may be retrieved from a memory of the smart home device, so as to implement the collection of the second scene information.

After the second scene information is collected, current credibility of the abnormal state of the target scene may be determined based on the first scene information and the second scene information. To be specific, based on the first scene information, it may be determined that the current target scene is in an abnormal state, and then a possible cause of formation of the current abnormal state may be analyzed in combination with the second scene information within the first time period prior to the current time period, so as to determine whether the abnormal state is formed accidentally, that is, to determine whether the abnormal state is credible. Only in a case where the credibility of the abnormal state is greater than a credibility threshold can it be determined that the currently detected abnormal state is credible, which may adversely affect normal living activities of the user.

Finally, in a case where it is determined that the current credibility of the abnormal state is greater than the credibility threshold, the abnormal state may be processed, for example, a smart home device capable of issuing alert information may be controlled to issue corresponding alert information, so as to notify the user that an abnormal state exists in the current target scene and timely processing is required.

In this way, according to the method for monitoring an abnormal state of a scene provided in the embodiments of the present disclosure, a state of the target scene is determined based on the information difference value between the first scene information and the reference scene information of the target scene; in a case where it is determined that an abnormal state exists in the target scene, the second scene information related to the abnormal state within the first time period prior to the current time period is collected for the target scene; and the current credibility of the abnormal state of the target scene is further determined by combining the first scene information and the second scene information. Processing, such as alerting or intervention, is performed on the abnormal state of the target scene merely in a case where the current credibility is greater than the credibility threshold. In this way, accuracy of detecting the abnormal state in the target scene can be effectively improved, thereby reducing occurrence of phenomena such as false reports and misreports, and improving user experience.

### Exemplary system

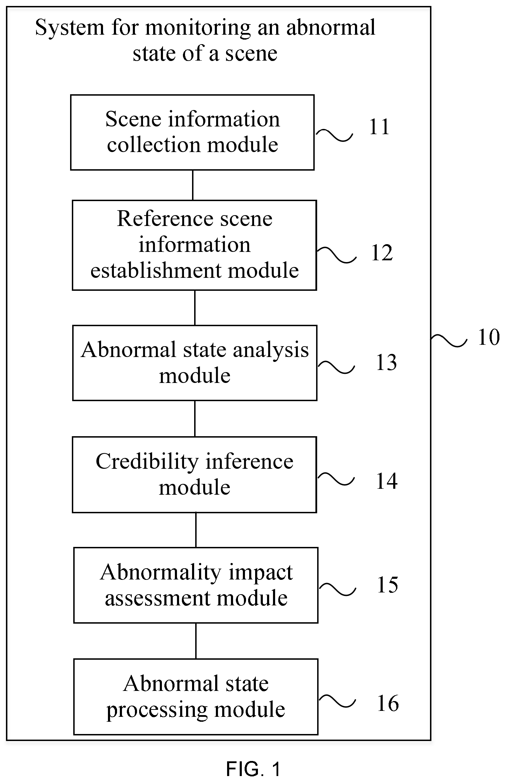

FIG. 1 is a block diagram of an architecture of a system for monitoring an abnormal state of a scene according to an exemplary embodiment of the present disclosure.

As shown in FIG. 1, a system 10 for monitoring an abnormal state of a scene may include a scene information collection module 11, a reference scene information establishment module 12, an abnormal state analysis module 13, a credibility inference module 14, an abnormality impact assessment module 15, and an abnormal state processing module 16.

The scene information collection module 11 may include a plurality of smart home devices within a target scene, such as a home camera, a robotic vacuum cleaner, a smart door lock, a smart speaker, a pan-tilt device, a millimeter-wave radar, an environmental sensor, smart lighting, and a pet feeder. Collection of scene information of the home scene, that is, the target scene, may be implemented through components such as the environmental sensor or the camera integrated in the smart home device. In addition, the smart home device may also have an integrated memory, so that the collected scene information may be stored through the memory. Thus, when it is subsequently detected that an abnormal state exists in the target scene, the related scene information is retrieved to analyze credibility of the abnormal state.

The abnormal state analysis module 13 may analyze first scene information collected by the scene information collection module 11, so as to determine whether an abnormal state exists in the target scene. For example, the abnormal state analysis module 13 may compare the first scene information with corresponding pre-stored reference scene information indicating that the target scene is in a normal state, so as to calculate an information difference value between the first scene information and the reference scene information. In a case where it is determined that the information difference value between the first scene information and the reference scene information is greater than or equal to a difference threshold, it may be determined that an abnormal state exists in the current target scene.

The credibility inference module 14 may determine current credibility of the abnormal state of the target scene based on the first scene information and the second scene information. The second scene information is collected by the scene information collection module 11 within a first time period prior to a current time period, and is stored in a memory integrated therein. Based on the first scene information, it may be determined that the current target scene is in an abnormal state, and then a possible cause of formation of the current abnormal state may be analyzed in combination with the second scene information within the first time period prior to the current time period, so as to determine whether the abnormal state is formed accidentally, that is, to determine whether the abnormal state is credible. Only in a case where the credibility of the abnormal state is greater than a credibility threshold can it be determined that the currently detected abnormal state is credible, which may adversely affect normal living activities of the user.

The abnormality impact assessment module 15 may assess possible impact of the currently detected abnormal state, that is, assess a degree of impact of the current abnormal state on living activities of the user. For example, when it is detected that an abnormal state of water on the floor exists in the target scene, the scene information collection module 11 may be used to collect scene information within the current target scene, and then the abnormality impact assessment module 15 may determine whether accumulated water on the floor is close to an electrical outlet or a robot charging dock, whether the accumulated water on the floor may affect operation of other devices or may cause a child to slip, and other situations.

The abnormal state processing module 16 may process the abnormal state when the current credibility of the abnormal state is greater than the credibility threshold. For example, the abnormal state processing module 16 may also include a smart home device operating within the target scene. Alert information corresponding to the abnormal state may be issued through an interaction unit integrated in the smart home device, so as to notify, through the alert information, the user to process the abnormal state in a timely manner. Alternatively, the abnormal state processing module 16 may directly intervene in the abnormal state, so as to remove the abnormal state or prevent the abnormal state from continuing to spread. For example, when the abnormal state of water on the floor is detected, a robotic vacuum cleaner may be used to directly process the accumulated water on the floor, so as to prevent the water from spreading.

Through the coordinated operation of the scene information collection module 11, the reference scene information establishment module 12, the abnormal state analysis module 13, the credibility inference module 14, the abnormality impact assessment module 15, and the abnormal state processing module 16, in a case where it is determined that an abnormal state exists in the target scene, the system 10 for monitoring an abnormal state of a scene in the embodiments of the present disclosure determines the current credibility of the abnormal state of the target scene by combining the first scene information and the second scene information, so that accuracy of detecting the abnormal state in the target scene may be effectively improved, thereby reducing occurrence of phenomena such as false reports and misreports, and improving user experience. Moreover, the system can also assess a degree of impact of the current abnormal state on the living activities of the user, and perform active intervention, so as to remove the abnormal state or prevent the abnormal state from continuing to spread.

### Exemplary method

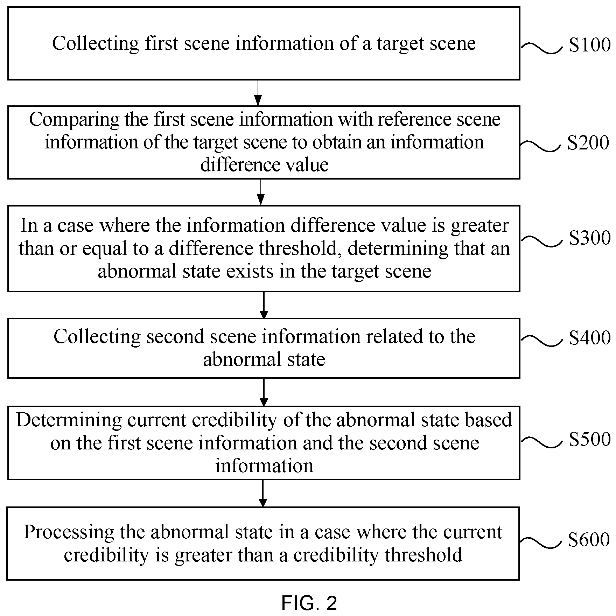

FIG. 2 is a schematic flowchart of a method for monitoring an abnormal state of a scene according to an exemplary embodiment of the present disclosure. This embodiment may be applied to a smart home device. As shown in FIG. 2, the method includes the following steps.

Step S100: Collecting first scene information of a target scene.

The first scene information includes scene information of the target scene that is collected within a current time period.

In an achievable implementation, during operation of the smart home device, the first scene information of the target scene may be collected by components such as an integrated environmental sensor or camera. In other words, scene information of the target scene within the current time period is collected in a real-time manner.

By adopting the implementation in this step, real-time collection of the first scene information of the target scene may be implemented by the smart home device, thereby providing a basis for determining whether an abnormal state exists in the target scene.

Step S200: Comparing the first scene information with reference scene information of the target scene to obtain an information difference value.

The reference scene information is pre-stored scene information corresponding to the target scene when the target scene is in a normal state.

In an achievable implementation, the smart home device may further compare, through a processor, the collected first scene information with the corresponding pre-stored reference scene information indicating that the target scene is in a normal state, so as to calculate an information difference value between the first scene information and the reference scene information.

It may be understood that, since the reference scene information is used to indicate scene information when the target scene is in a normal state, whether an abnormal state exists in the current target scene can be determined by comparing the first scene information and the reference scene information for the information difference value.

For example, regarding the calculation of the information difference value, a multi-dimensional feature vector of the current scene information collected in a real-time manner may be quantitatively compared with a standard feature vector of the pre-constructed reference scene information, to obtain a comprehensive difference indicator. For example, differences between feature vectors of different dimensions may be calculated in manners such as an image cosine similarity difference value, normalized Euclidean distance of multi-sensor data, and mean normalization of the map coordinate offsets in Simultaneous Localization and Mapping (SLAM), and then the differences of a plurality of dimensions may be fused by means of weighted fusion, to obtain a final information difference value. The information difference value may be used to quantify a degree of deviation between the first scene information of the current target scene and the reference scene information corresponding to the target scene in a normal state, with a larger value representing a more severe deviation of the scene from the normal state. The multi-dimensional features may include: image visual features, such as coordinates, a contour, and an average regional pixel value of an object; environmental sensing data, such as radar signals of humidity, water accumulation, smoke, a human body, or a pet; device status data, such as an open/closed state of a door or a window, an on/off state of a stove, and a state of lighting; and SLAM point information of a spatial position.

Step S300: In a case where the information difference value is greater than or equal to a difference threshold, determining that an abnormal state exists in the target scene.

In an achievable implementation, in a case where it is determined that the information difference value between the first scene information and the reference scene information is greater than or equal to the difference threshold, it may be determined that an abnormal state exists in the current target scene.

By adopting the implementation in this step, the information difference value between the first scene information and the reference scene information is compared with the difference threshold, so as to provide a quantifiable basis for determining whether an abnormal state currently exists in the target scene. Thus, determining logic may be effectively simplified, thereby improving determining efficiency.

Step S400: Collecting second scene information related to the abnormal state.

The second scene information includes scene information of the target scene that is collected within a first time period prior to the current time period.

In an achievable implementation, if the smart home device detects that an abnormal state exists in the current target scene, the second scene information related to the abnormal state may be collected.

It should be noted that the second scene information may include the scene information of the target scene that is collected within the first time period prior to the current time period. To be specific, the first scene information collected within the current time period is used to analyze whether an abnormal state exists in the target scene within the current time period. Moreover, when it is determined that an abnormal state exists within the current time period, the second scene information within the first time period prior to the current time period may be retrieved to analyze a cause of formation of the abnormal state, so as to avoid misjudgment of the abnormal state of the target scene caused by relying merely on the first scene information within the current time period.

It may be understood that the second scene information is scene information related to the detected abnormal state. Therefore, during collection of the second scene information, a smart home device related to the abnormal state may first be determined, and then data within the first time period may be retrieved from a memory of the smart home device, so as to implement the collection of the second scene information.

Step S500: Determining current credibility of the abnormal state based on the first scene information and the second scene information.

In an achievable implementation, after the second scene information is collected, the current credibility of the abnormal state of the target scene may be determined based on the first scene information and the second scene information.

To be specific, based on the first scene information, it may be determined that the current target scene is in an abnormal state, and then a possible cause of formation of the current abnormal state may be analyzed in combination with the second scene information within the first time period prior to the current time period, so as to determine whether the abnormal state is formed accidentally, that is, to determine whether the abnormal state is credible. Only in a case where the credibility of the abnormal state is greater than a credibility threshold can it be determined that the currently detected abnormal state is credible, which may adversely affect normal living activities of the user.

Step S600: Processing the abnormal state in a case where the current credibility is greater than a credibility threshold.

In an achievable implementation, in a case where it is determined that the current credibility of the abnormal state is greater than the credibility threshold, the abnormal state may be processed, for example, a smart home device capable of issuing alert information may be controlled to issue corresponding alert information, so as to notify the user that an abnormal state exists in the current target scene and timely processing is required. Alternatively, a smart home device with an integrated environmental sensor or image collection device may be controlled to continuously collect the scene information related to the abnormal state, so as to continuously observe a change trend of the abnormal state. Alternatively, a smart home device capable of changing the abnormal state may be controlled to operate to process the abnormal state, so as to remove the abnormal state or reduce a spreading trend of the abnormal state.

According to method for monitoring an abnormal state of a scene in the embodiments of the present disclosure, a state of the target scene is determined based on the information difference value between the first scene information and the reference scene information of the target scene; in a case where it is determined that an abnormal state exists in the target scene, the second scene information related to the abnormal state within the first time period prior to the current time period is collected for the target scene; and the current credibility of the abnormal state of the target scene is further determined by combining the first scene information and the second scene information. Processing, such as alerting or intervention, is performed on the abnormal state of the target scene merely in a case where the current credibility is greater than the credibility threshold. In this way, accuracy of detecting the abnormal state in the target scene can be effectively improved, thereby reducing occurrence of phenomena such as false reports and misreports, and improving user experience.

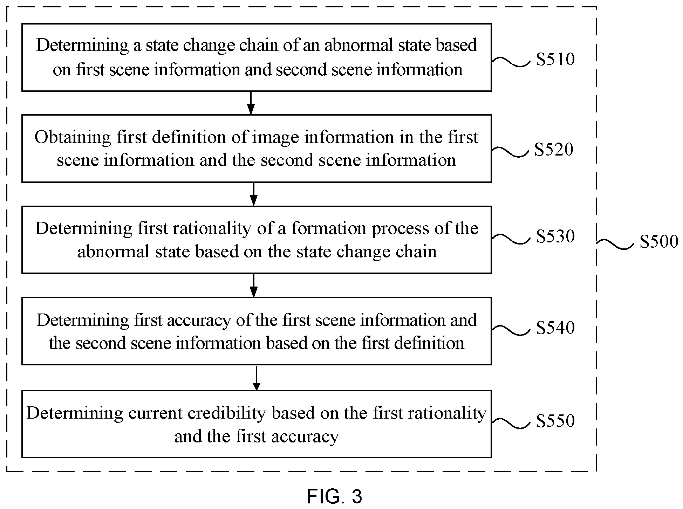

FIG. 3 is a schematic flowchart of a method for monitoring an abnormal state of a scene according to another exemplary embodiment of the present disclosure.

As shown in FIG. 3, in an implementation, step S500 of determining current credibility of the abnormal state based on the first scene information and the second scene information may include the following steps.

Steps S510: Determining a state change chain of the abnormal state based on the first scene information and the second scene information.

The state change chain is used to characterize a formation process of the abnormal state.

In an achievable implementation, the second scene information may include the scene information of the target scene that is collected within the first time period prior to the current time period. In this way, when it is determined through the first scene information that an abnormal state exists in the current target scene, how the abnormal state is formed may be determined based on the second scene information collected within the first time period, that is, the state change chain of the abnormal state may be determined, so as to characterize the formation process of the abnormal state through the state change chain.

For example, when it is determined through the first scene information that an abnormal state of water on the floor exists in the current target scene, the second scene information within the first time period prior to the current time may be collected. For example, the second scene information may include video information of the water-accumulated floor within the first time period, so as to determine, through the video information, whether the water on the floor is deliberately poured by the user, or is caused by the user or a pet accidentally knocking over a cup.

Step S520: Obtaining first definition of image information in the first scene information and the second scene information.

In an achievable implementation, in a case where the first scene information and the second scene information include the image information, the first definition of the image information may also be obtained.

It may be understood that, when determining whether the abnormal state is accurate through the image information, the definition of the image information is an important factor for accuracy of determining. For example, factors affecting the definition of the image information may include floor reflection, shadow coverage, object occlusion, or low illumination at night.

Step S530: Determining first rationality of a formation process of the abnormal state based on the state change chain.

In an achievable implementation, after the state change chain of the abnormal state is determined, the first rationality of the formation process of the abnormal state characterized by the state change chain may be analyzed based on the state change chain.

It may be understood that the first rationality of the formation process of the abnormal state indicates whether the formation process of the abnormal state conforms to a basic law, such as a normal behavior law of a person or a pet, or a physical law of an object. To be specific, when the rationality of the formation process of the abnormal state is relatively high, it may be determined that the credibility of the current abnormal state is relatively high. Conversely, when the rationality of the formation process is relatively low, the credibility of the abnormal state is also relatively low.

For example, regarding the calculation of the first rationality, each logical behavior in the state change chain of the abnormal state may be decomposed and matched one by one against pre-stored household behavior and physical common-sense rules under a normal state. If a compliant logical behavior is successfully matched, a corresponding score is added; and if the logical behavior violates common sense or a logical discontinuity exists, a score is deducted. After all matching is completed, scores corresponding to each logical behavior in the state change chain are normalized to output the first rationality.

Step S540: Determining first accuracy of the first scene information and the second scene information based on the first definition.

In an achievable implementation, since the definition of the image information is an important factor for determining the accuracy of determining the abnormal state, when the obtained first definition is relatively low, it indicates that the accuracy of the obtained first scene information and second scene information is relatively poor, and thus it may be determined that there is a relatively high probability of misjudgment in the current abnormal state. Conversely, if the first definition of the image information is relatively high, it indicates that the accuracy of the obtained first scene information and second scene information is relatively high.

In other words, after the first definition of the first scene information and the second scene information is obtained, the first accuracy of the first scene information and the second scene information may be determined based on the first definition, so as to use the first accuracy as an important basis for subsequently determining the current credibility of the abnormal state.

For example, regarding the calculation of the first accuracy, an image gradient variance method may be adopted to calculate a score for the first definition. In other words, a grayscale gradient variance may be calculated for an effective detection region of the image information. If the gradient variance is larger and edges and object contours of an image are clearer, the score for the first definition is higher. If reflection, low light, occlusion, and motion blur may substantially reduce the gradient variance, the score for the first definition is lower. Subsequently, a score range of the first definition is mapped to an accuracy score range of 0 to 1, and an actual score for the first definition that is obtained for the image information is mapped and normalized, so as to obtain the first accuracy corresponding to the first scene information and the second scene information. It may be understood that a higher score for the first definition indicates a higher corresponding score for the first accuracy.

Step S550: Determining the current credibility based on the first rationality and the first accuracy.

In an achievable implementation, after the first rationality of the formation process of the abnormal state and the first accuracy of the first scene information and the second scene information are obtained, the first rationality and the first accuracy may be combined to comprehensively consider the formation process of the abnormal state and the accuracy of the collected scene information, so as to determine the current credibility of the abnormal state. Thus, the accuracy of determining the abnormal state may be effectively improved.

For example, weights corresponding to the first rationality and the first accuracy may first be set, and then a weighted fusion calculation may be performed on the first rationality and the first accuracy to obtain the current credibility. For example, the weight of the first rationality may be set to 0.6, and the weight of the first accuracy may be set to 0.4. In other words, the weight of the first rationality is set higher, so as to preferentially determine a cause of the abnormal state, and then the credibility of the abnormal state is determined by combining image quality of an image.

According to the technical solutions in the embodiments of the present disclosure, in a case where it is detected that an abnormal state exists in the target scene, first, the state change chain of the abnormal state is determined based on the first scene information and the second scene information, to characterize the formation process of the abnormal state, and the first rationality of the formation process of the abnormal state is determined based on the state change chain; subsequently, the first accuracy of the first scene information and the second scene information is determined based on the first definition of the image information in the first scene information and the second scene information; and finally, the first rationality and the first accuracy are combined to comprehensively consider the formation process of the abnormal state and the accuracy of the collected scene information, so as to determine the current credibility of the abnormal state. In this way, the accuracy of determining the abnormal state may be effectively improved, thereby avoiding phenomena of false reports and misreports of the abnormal state, and improving user experience.

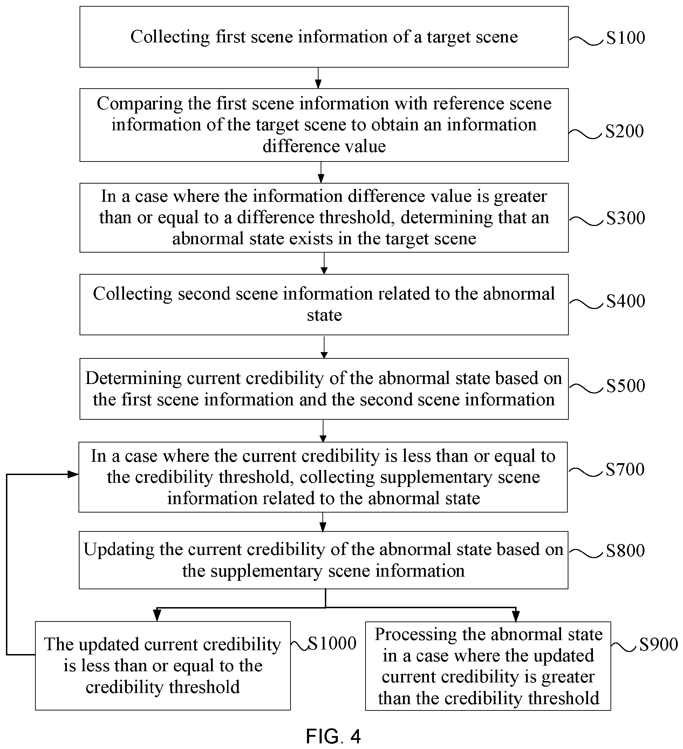

FIG. 4 is a schematic flowchart of a method for monitoring an abnormal state of a scene according to still another exemplary embodiment of the present disclosure.

As shown in FIG. 4, in an implementation, after step S500 of determining current credibility of the abnormal state based on the first scene information and the second scene information, the method may further include the following steps.

Step S700: In a case where the current credibility is less than or equal to the credibility threshold, collecting supplementary scene information related to the abnormal state.

The supplementary scene information includes scene information of the target scene that is collected after the current time period, and a collection strategy for the supplementary scene information is different from that for the first scene information.

In an achievable implementation, in a case where it is determined that the current credibility of the abnormal state is less than or equal to the credibility threshold, it indicates that a result, indicating that the target scene is in an abnormal state, that is analyzed based on the first scene information may be misjudged. In this case, to avoid missed determining of the abnormal state, the supplementary scene information related to the abnormal state may be collected through the smart home device, so as to further confirm the abnormal state based on the supplementary scene information, thereby further improving the accuracy of determining the abnormal state.

It may be understood that the supplementary scene information may be the scene information of the target scene that is collected after the current time period. To be specific, when the current credibility of the abnormal state that is obtained based on the scene information collected within the current time period and the first time period prior to the current time period is insufficient, scene information related to the abnormal state may continue to be collected in a subsequent time period, so as to further confirm the abnormal state.

In addition, the collection strategy for the supplementary scene information is different from that for the first scene information. In other words, in a case where the current credibility of the abnormal state that is determined based on the first scene information is insufficient, the abnormal state may be further confirmed by changing the collection strategy and re-collecting scene information related to the abnormal state, so as to determine whether the abnormal state is credible from a different perspective, thereby further improving the accuracy of determining the abnormal state. For example, the collection strategy may include a type of a collection device, operating parameters of the collection device, and a location of the collection device. To be specific, when the current credibility is insufficient, the collection strategy may be changed by switching to another collection device, changing the operating parameters of the current collection device, or changing the location of the collection device, so as to implement collection of the supplementary scene information.

Step S800: Updating the current credibility of the abnormal state based on the supplementary scene information.

In an achievable implementation, after the supplementary scene information related to the abnormal state is obtained, the current credibility of the abnormal state may be updated based on the supplementary scene information. To be specific, when it is determined based on the first scene information and the second scene information that the current credibility of the abnormal state of the target scene is insufficient, updating of the current credibility of the abnormal state is implemented by continuing to collect the supplementary scene information related to the abnormal state and further determining the current credibility of the abnormal state based on the supplementary scene information, so as to further confirm the abnormal state based on the updated current credibility.

It may be understood that, the supplementary scene information is obtained after the current time period, and the collection strategy for the supplementary scene information is different from that for the first scene information. In this way, the current credibility of the abnormal state may be determined based on different observation time and different observation perspectives, thereby improving the accuracy of determining the abnormal state.

Step S900: Processing the abnormal state in a case where the updated current credibility is greater than the credibility threshold.

In an achievable implementation, in a case where the updated current credibility is greater than the credibility threshold, the abnormal state may be processed, for example, a smart home device capable of issuing alert information may be controlled to issue corresponding alert information, so as to notify the user that an abnormal state exists in the current target scene and timely processing is required.

Step S1000: In a case where the updated current credibility is less than or equal to the credibility threshold, jumping to step S700.

In an achievable implementation, if the updated current credibility is still less than or equal to the credibility threshold, it indicates that credibility of a result, indicating that the target scene is in an abnormal state, that is analyzed based on the supplementary scene information is still insufficient, and a misjudgment still exists. In this case, analysis and confirmation may continue to be performed on the abnormal state, so as to avoid an accident caused by missed determining of the abnormal state.

In other words, if the updated current credibility is less than or equal to the credibility threshold, step S700 described above may be jumped to, and step S800 and step S900 or step S1000 may continue to be performed, until it is confirmed that the current credibility of the abnormal state is greater than the credibility threshold, or until it is confirmed that the abnormal state is removed.

According to the technical solutions in the embodiments of the present disclosure, in a case where it is determined that the current credibility of the abnormal state is less than or equal to the credibility threshold, supplementary scene information related to the abnormal state continuous to be collected in a subsequent time period according to a collection strategy different from that for the first scene information, so that the current credibility of the abnormal state may be updated based on the supplementary scene information. Thus, the abnormal state may be further confirmed, thereby effectively improving the accuracy of determining the abnormal state. Meanwhile, when the updated current credibility is less than the credibility threshold, the processes of collecting the supplementary scene information and updating the current credibility may be executed cyclically, thereby effectively avoiding an accident caused by missed determining of the abnormal state.

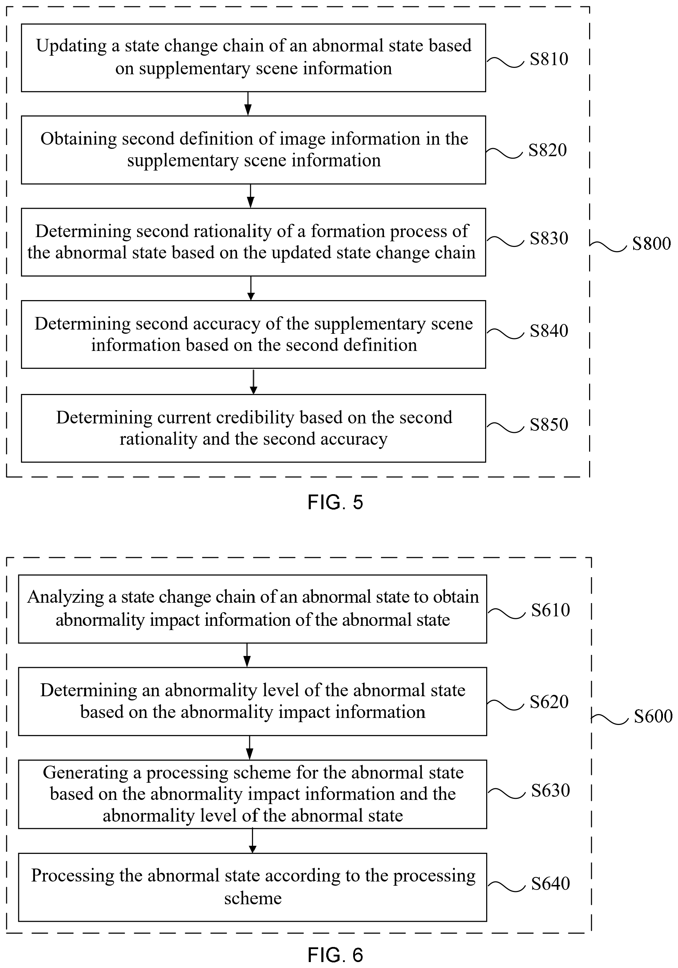

FIG. 5 is a schematic flowchart of a method for monitoring an abnormal state of a scene according to yet another exemplary embodiment of the present disclosure.

As shown in FIG. 5, in an implementation, step S800 of updating the current credibility of the abnormal state based on the supplementary scene information may include the following steps.

Step S810: Updating the state change chain of the abnormal state based on the supplementary scene information.

In an achievable implementation, after the supplementary scene information related to the abnormal state is collected, the supplementary scene information may be combined with the previously obtained first scene information and second scene information, so as to combine scene changes within time periods before and after the detection of the abnormal state to infer the state change chain of the abnormal state, thereby implementing the updating of the state change chain of the abnormal state, and characterizing the formation process of the abnormal state through the updated state change chain.

Step S820: Obtaining second definition of image information in the supplementary scene information.

In an achievable implementation, in a case where the supplementary scene information includes the image information, the second definition of the image information may also be obtained.

For the same reason as obtaining the first definition, in a case where the supplementary scene information includes the image information, the definition of the image information is an important factor for the accuracy of determining. Therefore, the second definition of the image information in the supplementary scene information may be obtained to provide a basis for subsequently updating the current credibility of the abnormal state.

Step S830: Determining second rationality of the formation process of the abnormal state based on the updated state change chain.

In an achievable implementation, after the state change chain of the abnormal state is updated, the second rationality of the formation process of the abnormal state that is characterized by the updated state change chain may be analyzed based on the updated state change chain.

Step S840: Determining second accuracy of the supplementary scene information based on the second definition.

In an achievable implementation, after the second definition of the image information in the supplementary scene information is obtained, the second accuracy of the supplementary scene information may be determined based on the second definition, so as to use the second accuracy as an important basis for subsequently updating the current credibility of the abnormal state.

Step S850: Determining the current credibility based on the second rationality and the second accuracy.

In an achievable implementation, after the second rationality of the formation process of the abnormal state and the second accuracy of the supplementary scene information are obtained, the second rationality and the second accuracy may be combined to comprehensively consider the formation process of the abnormal state and the accuracy of the further collected supplementary scene information, so as to update the current credibility of the abnormal state. Thus, the accuracy of determining the abnormal state may be effectively improved.

According to the technical solutions in the embodiments of the present disclosure, in a case where it is determined that the current credibility of the abnormal state is less than or equal to the credibility threshold, first, the state change chain of the abnormal state is updated based on the collected supplementary scene information, and the second rationality of the formation process of the abnormal state is updated based on the updated state change chain; subsequently, the second accuracy of the supplementary scene information is determined based on the second definition of the image information in the supplementary scene information; and finally, the second rationality and the second accuracy are combined to comprehensively consider the scene changes within the time periods before and after the abnormal state, so as to update the current credibility of the abnormal state. In this way, the accuracy of determining the abnormal state is effectively improved, thereby avoiding phenomena of false reports and misreports of the abnormal state, and improving user experience.

FIG. 6 is a schematic flowchart of a method for monitoring an abnormal state of a scene according to still yet another exemplary embodiment of the present disclosure.

As shown in FIG. 6, in an implementation, step S600 of processing the abnormal state in a case where the current credibility is greater than a credibility threshold may include the following steps.

Step S610: Analyzing the state change chain of the abnormal state to obtain abnormality impact information of the abnormal state.

The abnormality impact information is an impact range and an abnormal result of the abnormal state that are obtained by predicting the abnormal state.

In an achievable implementation, the abnormal state may be processed in a case where it is determined that the current credibility of the abnormal state is greater than the credibility threshold. In the process of processing the abnormal state, the state change chain of the abnormal state may first be analyzed, so as to obtain the abnormality impact information of the abnormal state.

For example, the state change chain of the abnormal state may be processed by a pre-trained neural network model, so as to predict the abnormal state, that is, to predict impact and an abnormal result of the abnormal state in a subsequent time period, so as to obtain the abnormality impact information of the abnormal state. The neural network model may include a vision language model (VLM), a large language model (LLM), or the like. For example, for the abnormal state of water on the floor, scene information related to the abnormal state may be input into the neural network model. The neural network model may predict, based on volume, a spread trend, a spread direction, and a spread speed of the accumulated water on the floor, an impact range that the accumulated water on the floor may reach, for example, whether the accumulated water on the floor may approach an electrical outlet or a robot charging dock; and may also predict whether the accumulated water on the floor may affect operation of other devices or may cause a child to slip and other abnormal results.

Step S620: Determining an abnormality level of the abnormal state based on the abnormality impact information.

In an achievable implementation, the abnormality level of the abnormal state may be determined based on the impact range and the abnormal result of the abnormal state. It may be understood that the abnormality level of the abnormal state is used to characterize severity of consequences that the abnormal state may cause. A higher abnormality level of the abnormal state indicates a more severe consequence that the abnormal state may cause, which requires timely intervention. Conversely, a lower abnormality level indicates that the abnormal state would not cause a severe consequence.

For example, the abnormality level may be divided into three levels, that is, a low level, a medium level, and a high level, where a higher level represents a more severe potential hazard, loss, or potential safety hazard. The impact range may include three situations: slight local spread, local spread, and large-scale spread throughout the house. The abnormal result may include a plurality of situations, such as slight item wear, personal slipping or bumping, electrical fire due to leakage, damage to household appliances due to water immersion, and other safety accidents. During determining of the abnormality level, a score of 0 to 5 may be set for each situation in the impact range and the abnormal result, with a higher score for a more severe potential safety hazard or a larger impact range. Subsequently, a total score for the current abnormal state is obtained by means of weighted summation, and finally, the abnormality level of the abnormal state is determined based on the total score. For example, if the total score is in a range of 0 to 2, it may be determined that a risk level is the low level; if the total score is in a range of 2 to 4, it may be determined that the risk level is the medium level; and if the total score is in a range of 4 to 5, it may be determined that the risk level is the high level.

Step S630: Generating a processing scheme for the abnormal state based on the abnormality impact information and the abnormality level of the abnormal state.

The processing scheme includes at least one of a prompting scheme, an observation scheme, and an intervention scheme.

In an achievable implementation, after the abnormality level of the abnormal state is determined, the abnormality impact information of the abnormal state may be combined with the abnormality level to comprehensively consider the impact range, the abnormal result, and severity of possible consequences of the abnormal state, so as to generate a corresponding processing scheme, thereby ensuring rationality of the process of processing the abnormal state.

For example, the processing scheme for the abnormal state may include the prompting scheme. To be specific, by means of sending prompt information, the user may be notified that an abnormal state currently exists in the target scene. The prompt information may be a voice announcement. By means of a voice announcement, the user may not only be notified of the abnormal state, but a cause of formation, the impact range, and the abnormal result of the abnormal state may also be directly announced, thereby facilitating processing of the user for the abnormal state.

The processing scheme for the abnormal state may also include the observation scheme. To be specific, in a case where the current abnormal state has relatively small impact on the target scene and would not cause a severe consequence, the abnormal state may be observed, so as to analyze the change trend of the abnormal state to determine whether the abnormal state has a trend to expand and whether a severe consequence may be caused. Prompt information is issued or active intervention is performed only when needed, so as to process the current abnormal state without affecting the normal living activities of the user.

The processing scheme for the abnormal state may also include the intervention scheme. The intervention scheme is to control the smart home device to operate within the target scene, so as to remove the abnormal state or reduce the spreading trend of the abnormal state. For example, for the abnormal state of water on the floor, the robotic vacuum cleaner may be used to process the accumulated water on the floor, so as to remove the abnormal state. Alternatively, based on excessively long continuous heating duration of a cooking vessel, a smart stove may be controlled to stop heating, so as to avoid burning food or causing a fire.

It may be understood that, since the abnormality impact information is the impact range and the abnormal result of the abnormal state that are obtained by predicting the abnormal state, that is, the abnormality level is determined by combining the impact range and the abnormal result of the abnormal state, there may be a situation in which the abnormality level is the low level, but one of the impact range and the abnormal result has a relatively high score while the other one has a relatively low score. In this way, it is needed to combine the abnormality level with the abnormality impact information to determine the processing scheme, thereby ensuring rationality of the processing scheme for the abnormal state. For example, if the abnormality level of the abnormal state is the low level, the impact range is relatively small, and no safety accident may be caused, the observation scheme may be selected to process the abnormal state. Conversely, even if the abnormality level of the abnormal state is the low level, but the impact range is relatively large and no safety accident may be caused, a manner of combining the observation scheme and the prompting scheme may be selected to process the abnormal state. Alternatively, even if the abnormality level of the abnormal state is the low level and the impact range is relatively small, but a safety accident may be caused, a manner of combining the prompting scheme and the intervention scheme may be adopted to process the abnormal state.

Step S640: Processing the abnormal state according to the processing scheme.

In an achievable implementation, after the processing scheme corresponding to the abnormal state is determined, the abnormal state may be processed according to the processing scheme.

It may be understood that the processing for the abnormal state may involve controlling the smart home device related to the abnormal state to operate. For example, for the prompting scheme, a smart home device having a voice announcement function or a display function may be controlled to announce and display the prompt information. For the observation scheme, a smart home device with an integrated environmental sensor or image collection device may be controlled to continuously collect the scene information related to the abnormal state, so as to continuously observe the change trend of the abnormal state. For the intervention scheme, a smart home device capable of changing the abnormal state may be controlled to operate to process the abnormal state, so as to remove the abnormal state or reduce the spreading trend of the abnormal state.

According to the technical solutions in the embodiments of the present disclosure, the abnormality impact information is obtained by analyzing the abnormal state change chain, and the abnormality level of the abnormal state is further determined based on the impact information, so that the processing scheme for processing the abnormal state may be generated based on the abnormality impact information and the abnormality level, thereby ensuring the rationality of the process of processing the abnormal state.

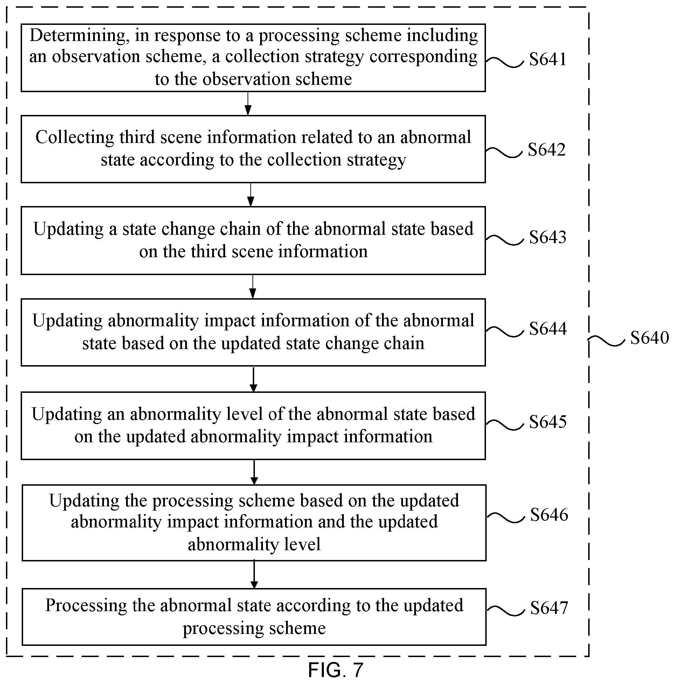

FIG. 7 is a schematic flowchart of a method for monitoring an abnormal state of a scene according to a further exemplary embodiment of the present disclosure.

As shown in FIG. 7, in an implementation, step S640 of processing the abnormal state according to the processing scheme may include the following steps.

Step S641: Determining, in response to the processing scheme including the observation scheme, a collection strategy corresponding to the observation scheme.

In an achievable implementation, in a case where the current abnormal state has relatively small impact on the target scene and would not cause a severe consequence, the abnormal state may be observed, so as to analyze the change trend of the abnormal state.

In other words, in a case where the processing scheme for the current abnormal state is the observation scheme, the collection strategy of the observation scheme may first be determined. It may be understood that for the observation scheme, it is generally required to control the smart home device with an integrated environmental sensor or image collection device to continuously collect the scene information related to the abnormal state, so as to continuously observe the change trend of the abnormal state. Therefore, before the scene information related to the abnormal state is collected, a collection strategy related to the abnormal state may first be determined. The strategy may include the type of the collection device, the operating parameters of the collection device, the location of the collection device, and the like, so that the collection strategy may be changed by switching to another collection device, changing the operating parameters of the current collection device, or changing the location of the collection device, so as to achieve collection of third scene information related to the abnormal state.

Step S642: Collecting third scene information related to the abnormal state according to the collection strategy.

In an achievable implementation, after the collection strategy is determined, a corresponding smart home device may be controlled to operate according to the collection strategy, so as to collect the third scene information related to the abnormal state within the target scene.

It may be understood that the third scene information is further collected after the abnormal state is detected, that is, the third scene information is collected after the first scene information, and a collection strategy for the third scene information may be same as or different from that for the first scene information. Therefore, a development trend of the abnormal state may be observed based on the third scene information, preparing for subsequently processing of the abnormal state.

Step S643: Updating the state change chain of the abnormal state based on the third scene information.

In an achievable implementation, after the third scene information related to the abnormal state is collected, the third scene information may be combined with the previously obtained first scene information and second scene information, so as to combine the scene changes within the time periods before and after the detection of the abnormal state to infer the state change chain of the abnormal state, thereby implementing the updating of the state change chain of the abnormal state. The development trend of the abnormal state may be characterized by the updated state change chain, and then the processing scheme for the abnormal state may be updated based on the development trend.

Step S644: Updating the abnormality impact information of the abnormal state based on the updated state change chain.

In an achievable implementation, after the state change chain of the abnormal state is updated, the updated state change chain may be analyzed to update the abnormality impact information of the abnormal state.

For example, the updated state change chain of the abnormal state may also be processed by the pre-trained neural network model, so as to predict the abnormal state, that is, to predict the impact and the abnormal result of the abnormal state in the subsequent time period, thereby implementing the updating of the abnormality impact information of the abnormal state.

Step S645: Updating the abnormality level of the abnormal state based on the updated abnormality impact information.

In an achievable implementation, the abnormality level of the abnormal state may be updated based on the updated abnormality impact information. In this way, based on the updated abnormality level, a change in a consequence that the abnormal state may cause may be characterized, that is, whether the abnormal state may cause a severe consequence in a subsequent period of time may be determined.

Step S646: Updating the processing scheme based on the updated abnormality impact information and the updated abnormality level.

In an achievable implementation, after the abnormality level of the abnormal state is updated, the updated abnormality impact information of the abnormal state may be combined with the updated abnormality level to comprehensively consider the impact range, the abnormal result, and severity of possible consequences of the abnormal state, so as to generate a corresponding processing scheme, thereby ensuring rationality of the process of processing the abnormal state.

Step S647: Processing the abnormal state according to the updated processing scheme.

In an achievable implementation, after the processing scheme corresponding to the abnormal state is updated, the abnormal state may be processed according to the updated processing scheme.

It may be understood that the updated processing scheme may also include a prompting scheme, an observation scheme, or an intervention scheme.

According to the technical solutions in the embodiments of the present disclosure, in a case where the current abnormal state has relatively small impact on the target scene and would not cause a severe consequence, the abnormal state may be processed according to the observation scheme. In an observation processing process, the third scene information related to the abnormal state is collected, and the state change chain, the abnormality impact information, and the abnormality level of the abnormal state are updated based on the third scene information, so that the processing scheme is updated based on the updated abnormality impact information and the updated abnormality level, and then the abnormal state is processed according to the updated processing scheme, thereby ensuring the rationality of processing the abnormal state and improving the user experience.

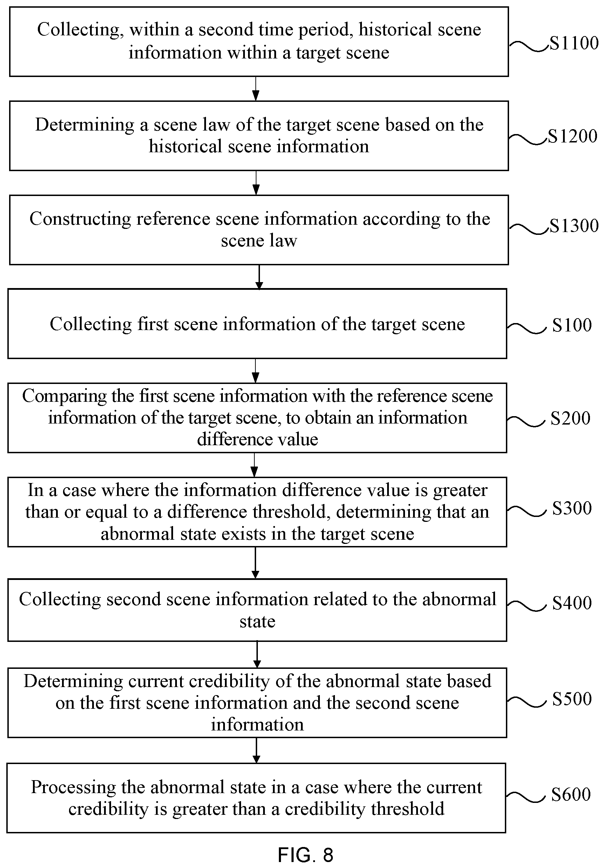

FIG. 8 is a schematic flowchart of a method for monitoring an abnormal state of a scene according to a still further exemplary embodiment of the present disclosure.

As shown in FIG. 8, in an implementation, before step S100 of collecting first scene information of a target scene, the method may include the following steps.

Step S1100: Collecting, within a second time period, historical scene information within the target scene.

The second time period is a time period prior to the first time period, and duration of the second time period is longer than that of the first time period.

In an achievable implementation, before determining, based on the first scene information, whether an abnormal state currently exists in the target scene, it is first needed to establish reference scene information corresponding to the target scene, so that the first scene information may be compared with the reference scene information of the target scene to obtain an information difference value, and then the abnormal state in the target scene may be detected based on the information difference value.

In the process of establishing the reference scene information, the historical scene information of the target scene may first be collected within the second time period. It should be noted that, the second scene information within the first time period prior to the current time period is collected in the process of determining the current credibility of the abnormal state, and an objective of the second scene information is to analyze the current credibility of the abnormal state. Therefore, the first time period may include only a short period of time prior to the current time period, for example, 10 minutes or 20 minutes. However, an objective of the historical scene information is to establish the reference scene information, and the historical scene information needs to include scene information of the target scene within a relatively long historical time period. In other words, the duration of the second time period may be longer than that of the first time period. For example, the second time period may be set to 7 days, 15 days, or one month.

For example, the historical scene information may be a conventional color image, a depth image, and a SLAM image of the target scene. Through these images, a household layout, common item locations, pet activity trajectories, item object information, spatial usage laws, and relative positional relationships between item objects within the target scene may be reflected.

Step S1200: Determining a scene law of the target scene based on the historical scene information.

The scene law includes at least one of a spatial layout law, an object distribution law, an object activity law, and an object association law of the target scene.

In an achievable implementation, the scene law of the target scene may be determined based on the obtained historical scene information.

For example, the scene law may include a location of a sofa, a dining table, or a cat tree in the target scene; common placement locations of items such as a remote control, a key, or a medicine box; a probability of a pet being active in different areas; an opening and closing law of items such as a front door, a child safety gate, or a kitchen light; and primary use of spaces such as a dining table, a balcony, or a children's room.

When determining the scene law of the target scene, the historical scene information may be processed by using a corresponding neural network model. For example, a vision language large model may be used to process images of the target scene, to obtain the spatial layout law, the object distribution law, and the object activity law of the target scene; and a large language model may be used to establish an object association law between items.

Step S1300: Constructing the reference scene information according to the scene law.

In an achievable implementation, the reference scene information corresponding to the target scene may be constructed according to the scene law of the target scene. In this way, when monitoring the abnormal state of the target scene, the obtained first scene information may be compared with the reference scene information, and then the information difference value between the first scene information and the reference scene information may be obtained based on a comparison result, so as to determine, based on the information difference value, whether an abnormal state exists in the target scene.

According to the technical solutions in the embodiments of the present disclosure, the historical scene information of the target scene is collected within the second time period, so that the historical scene information may be analyzed to obtain a scene law of the historical scene; and then the reference scene information corresponding to the target scene may be established according to the scene law. In this way, a basis for determining may be provided for subsequently monitoring the abnormal state of the target scene based on the first scene information, thereby implementing automated detection of the abnormal state.

### Exemplary apparatus

The method for monitoring an abnormal state of a scene provided in the embodiments of the present disclosure is described above. It may be understood that, to implement various functions of the method for monitoring an abnormal state of a scene, an apparatus for monitoring an abnormal state of a scene may include corresponding hardware and software for implementing functions of the hardware.

A person skilled in the art should easily conceive that, in combination with the steps of the method for monitoring an abnormal state of a scene described in the embodiments of the present disclosure, the embodiments of the present disclosure can be implemented in a form of hardware or in a form of software-driven hardware. Whether a certain function is implemented in a form of hardware or software-driven hardware depends on specific application and design constraints of the technical solutions. A person skilled in the art may use different methods to implement the described functions for each specific application, but such implementation should not be considered beyond the scope of the present disclosure.

For beneficial technical effects corresponding to the exemplary embodiments of this apparatus, reference may be made to the corresponding beneficial technical effects in the exemplary method section described above, and details are not described herein.

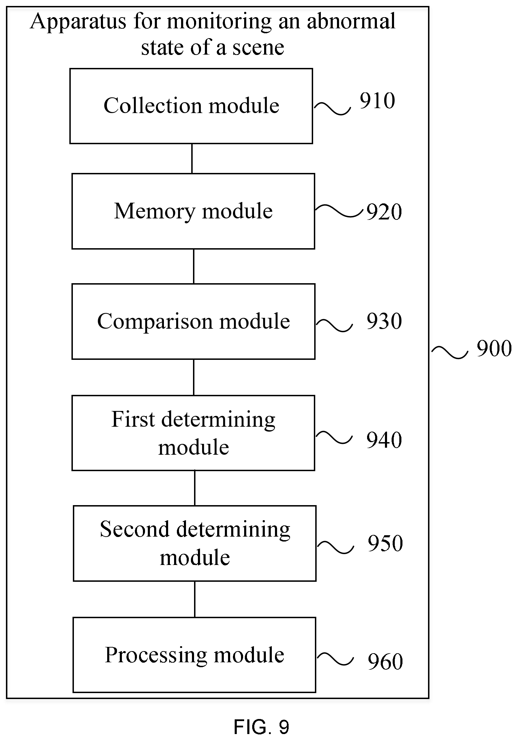

FIG. 9 is a schematic diagram of a structure of an apparatus for monitoring an abnormal state of a scene according to an exemplary embodiment of the present disclosure.

As shown in FIG. 9, in an embodiment, an apparatus 900 for monitoring an abnormal state of a scene includes: a collection module 910, configured to collect first scene information and second scene information of a target scene, where the first scene information includes scene information of the target scene that is collected within a current time period, and the second scene information includes scene information of the target scene that is collected within a first time period prior to the current time period; a memory module 920, configured to store reference scene information, where the reference scene information is pre-stored scene information corresponding to the target scene when the target scene is in a normal state; a comparison module 930, configured to compare the first scene information with the reference scene information, to obtain an information difference value; a first determining module 940, configured to determine, in a case where the information difference value is greater than or equal to a difference threshold, that an abnormal state exists in the target scene; a second determining module 950, configured to determine current credibility of the abnormal state based on the first scene information and the second scene information; and a processing module 960, configured to process the abnormal state in a case where the current credibility is greater than a credibility threshold.

According to the apparatus for monitoring an abnormal state of a scene provided in the present disclosure, a state of the target scene is determined based on the information difference value between the first scene information and the reference scene information of the target scene; in a case where it is determined that an abnormal state exists in the target scene, the second scene information related to the abnormal state within the first time period prior to the current time period is collected for the target scene; and the current credibility of the abnormal state of the target scene is further determined by combining the first scene information and the second scene information. Processing, such as alerting or intervention, is performed on the abnormal state of the target scene merely in a case where the current credibility is greater than the credibility threshold. In this way, accuracy of detecting the abnormal state in the target scene can be effectively improved, thereby reducing occurrence of phenomena such as false reports and misreports, and improving user experience.

In an achievable implementation, the second determining module 950 is configured to: determine a state change chain of the abnormal state based on the first scene information and the second scene information; obtain first definition of image information in the first scene information and the second scene information; determine first rationality of the formation process of the abnormal state based on the state change chain; determine first accuracy of the first scene information and the second scene information based on the first definition; and determine the current credibility based on the first rationality and the first accuracy.

In an achievable implementation, the collection module 910 is further configured to: in a case where the current credibility is less than or equal to the credibility threshold, collect supplementary scene information related to the abnormal state, wherein the supplementary scene information includes scene information of the target scene that is collected after the current time period, and a collection strategy for the supplementary scene information is different from that for the first scene information. The second determining module 950 is further configured to: update the current credibility of the abnormal state based on the supplementary scene information. The processing module 960 is further configured to: process the abnormal state in a case where the updated current credibility is greater than the credibility threshold; and in a case where the updated current credibility is less than or equal to the credibility threshold, jump to the step of collecting supplementary scene information related to the abnormal state.

In an achievable implementation, the second determining module 950 is further configured to: update the state change chain of the abnormal state based on the supplementary scene information; obtain second definition of image information in the supplementary scene information; determine second rationality of the formation process of the abnormal state based on the updated state change chain; determine second accuracy of the supplementary scene information based on the second definition; and determine the current credibility based on the second rationality and the second accuracy.

In an achievable implementation, the processing module 960 is configured to: analyze the state change chain of the abnormal state to obtain abnormality impact information of the abnormal state, wherein the abnormality impact information is an impact range and an abnormal result of the abnormal state that are obtained by predicting the abnormal state; determine an abnormality level of the abnormal state based on the abnormality impact information; generate a processing scheme for the abnormal state based on the abnormality impact information and the abnormality level of the abnormal state, wherein the processing scheme includes at least one of a prompting scheme, an observation scheme, and an intervention scheme; and process the abnormal state according to the processing scheme.

In an achievable implementation, the processing module 960 is further configured to: determine, in response to the processing scheme including the observation scheme, a collection strategy corresponding to the observation scheme; collect third scene information related to the abnormal state according to the collection strategy; update the state change chain of the abnormal state based on the third scene information; update the abnormality impact information of the abnormal state based on the updated state change chain; update the abnormality level of the abnormal state based on the updated abnormality impact information; update the processing scheme based on the updated abnormality impact information and the updated abnormality level; and process the abnormal state according to the updated processing scheme.

In an achievable implementation, the collection module 910 is further configured to: collect, within a second time period, historical scene information within the target scene, wherein the second time period is a time period prior to the first time period, and duration of the second time period is longer than that of the first time period. The first determining module 940 is further configured to: determine a scene law of the target scene based on the historical scene information, wherein the scene law includes at least one of a spatial layout law, an object distribution law, an object activity law, and an object association law of the target scene. The apparatus for monitoring an abnormal state of a scene further includes: a construction module, configured to construct the reference scene information according to the scene law.

### Exemplary electronic device

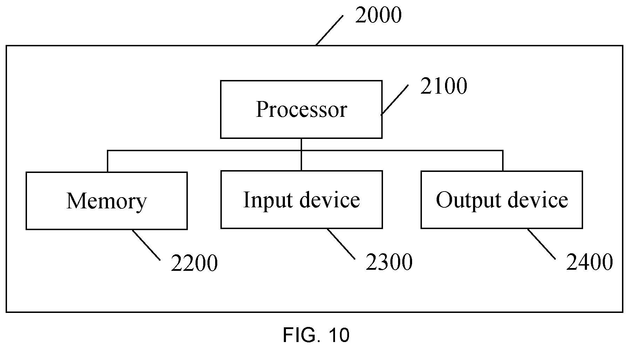

FIG. 10 is a schematic diagram of a structure of an electronic device according to an exemplary embodiment of the present disclosure. The electronic device includes at least one processor 2100 and a memory 2200.

The processor 2100 may be a central processing unit (CPU) or another form of processing unit having a data processing capability and/or an instruction execution capability, and may control other components in the electronic device 2000 to implement desired functions.

The memory 2200 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, or a flash memory. One or more computer program instructions may be stored on the computer readable storage medium. The processor 2100 may run the one or more computer program instructions to implement the method for monitoring an abnormal state of a scene according to various embodiments of the present disclosure that are described above and/or other desired functions.

In an example, the electronic device 2000 may further include an input device 2300 and an output device 2400. These components are interconnected through a bus system and/or other forms of connection mechanisms (not shown).

The input device 2300 may further include, for example, a keyboard or a mouse.

The output device 2400 may output various information to the outside, and may include, for example, a display, a speaker, a printer, a communication network, and a remote output device connected to the communication network.

Certainly, for simplicity, FIG. 10 shows only some of the components in the electronic device 2000 that are related to the present disclosure, and components such as a bus and an input/output interface are omitted. In addition, according to specific applications, the electronic device 2000 may also include any other appropriate components.

Exemplary computer program product and computer readable storage medium

In addition to the foregoing method and device, embodiments of the present disclosure may also relate to a computer program product including computer program instructions that, when run by a processor, cause the processor to perform the steps of the method for monitoring an abnormal state of a scene according to the embodiments of the present disclosure, that are described in the "Exemplary method" section of this specification.

The computer program product may be program code, written with one or any combination of a plurality of programming languages, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by the processor, cause the processor to perform the steps of the method for monitoring an abnormal state of a scene according to the embodiments of the present disclosure, that are described in the "Exemplary method" section of this specification.

The computer readable storage medium may be one readable medium or any combination of a plurality of readable media. The readable medium may be a readable signal medium or a readable storage medium. The readable storage medium may include, for example but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory) an optical fiber, a portable compact disc read-only memory (CD-ROM), an optical storage device, a magnetic storage device, or any suitable combination of the above.

Basic principles of the present disclosure are described above in combination with specific embodiments. However, it should be pointed out that advantages, superiorities, and effects mentioned in the present disclosure are merely examples rather than limitations, and it cannot be considered that these advantages, superiorities, and effects are necessary for the embodiments of the present disclosure. In addition, the specific details disclosed above are merely for examples and for ease of understanding, rather than for limitations. The details described above do not limit the present disclosure to necessarily adopting the foregoing specific details for implementation.

The block diagrams of the equipment, the apparatus, the device, and the system involved in the present disclosure are merely exemplary examples and are not intended to require or imply that the equipment, the apparatus, the device, and the system must be connected, arranged, and configured in the manners shown in the block diagrams. It is recognized by a person skilled in the art that, the equipment, the apparatus, the device, and the system may be connected, arranged, and configured in an arbitrary manner. The terms such as "include", "contain", and "have" are open terms that mean "including but not limited to", and can be used interchangeably with "including but not limited to". The terms "or" and "and" used herein refer to the term "and/or", and can be used interchangeably with "and/or", unless the context clearly indicates otherwise. The term "such as" used herein refers to the phrase "such as but not limited to", and can be used interchangeably with "such as but not limited to".

It should be further pointed out that, various components or various steps in the apparatus, the device, and the method of the present disclosure may be decomposed and/or recombined. These decomposition and/or recombination shall be regarded as equivalent solutions of the present disclosure.

The foregoing description about the disclosed aspects is provided, so that the present disclosure can be arrived at or carried out by any person skilled in the art. Various modifications to these aspects are readily obvious to a person skilled in the art. Moreover, general principles defined herein may be applicable to other aspects without departing from the scope of the present disclosure. Therefore, the present disclosure is not intended to be limited to the aspects illustrated herein, but to the widest scope consistent with the principles and novel features disclosed herein.

The foregoing descriptions are given for illustration and description. In addition, the descriptions are not intended to limit the embodiments of the present disclosure to forms disclosed herein. Although a plurality of exemplary aspects and embodiments have been discussed above, a person skilled in the art may recognize certain variations, modifications, changes, additions, and sub-combinations thereof.

## Claims

1. A method for monitoring an abnormal state of a scene, comprising:
collecting (S100) first scene information of a target scene, wherein the first scene information comprises scene information of the target scene that is collected within a current time period;
comparing (S200) the first scene information with reference scene information of the target scene to obtain an information difference value, wherein the reference scene information is pre-stored scene information corresponding to the target scene when the target scene is in a normal state;
in a case where the information difference value is greater than or equal to a difference threshold, determining (S300) that an abnormal state exists in the target scene;
collecting (S400) second scene information related to the abnormal state, wherein the second scene information comprises scene information of the target scene that is collected within a first time period prior to the current time period;
determining (S500) current credibility of the abnormal state based on the first scene information and the second scene information; and
processing (S600) the abnormal state in a case where the current credibility is greater than a credibility threshold.

2. The method for monitoring an abnormal state according to claim 1, wherein the determining (S500) current credibility of the abnormal state based on the first scene information and the second scene information comprises:
determining (S510) a state change chain of the abnormal state based on the first scene information and the second scene information, wherein the state change chain is used to characterize a formation process of the abnormal state;
obtaining (S520) first definition of image information in the first scene information and the second scene information;
determining (S530) first rationality of the formation process of the abnormal state based on the state change chain;
determining (S540) first accuracy of the first scene information and the second scene information based on the first definition; and
determining (S550) the current credibility based on the first rationality and the first accuracy.

3. The method for monitoring an abnormal state according to claim 2, wherein after the determining (S500) current credibility of the abnormal state based on the first scene information and the second scene information, the method further comprises:
in a case where the current credibility is less than or equal to the credibility threshold, collecting (S700) supplementary scene information related to the abnormal state, wherein the supplementary scene information comprises scene information of the target scene that is collected after the current time period, and a collection strategy for the supplementary scene information is different from that for the first scene information;
updating (S800) the current credibility of the abnormal state based on the supplementary scene information;
processing (S900) the abnormal state in a case where the updated current credibility is greater than the credibility threshold; and
in a case (S1000) where the updated current credibility is less than or equal to the credibility threshold, jumping to the step of collecting (S700) supplementary scene information related to the abnormal state.

4. The method for monitoring an abnormal state according to claim 3, wherein the updating (S800) the current credibility of the abnormal state based on the supplementary scene information comprises:
updating (S810) the state change chain of the abnormal state based on the supplementary scene information;
obtaining (S820) second definition of image information in the supplementary scene information;
determining (S830) second rationality of the formation process of the abnormal state based on the updated state change chain;
determining (S840) second accuracy of the supplementary scene information based on the second definition; and
determining (S850) the current credibility based on the second rationality and the second accuracy.

5. The method for monitoring an abnormal state according to any one of claims 2 to 4, wherein the processing (S600) the abnormal state comprises:
analyzing (S610) the state change chain of the abnormal state to obtain abnormality impact information of the abnormal state, wherein the abnormality impact information is an impact range and an abnormal result of the abnormal state that are obtained by predicting the abnormal state;
determining (S620) an abnormality level of the abnormal state based on the abnormality impact information;
generating (S630) a processing scheme for the abnormal state based on the abnormality impact information and the abnormality level of the abnormal state, wherein the processing scheme comprises at least one of a prompting scheme, an observation scheme, and an intervention scheme; and
processing (S640) the abnormal state according to the processing scheme.

6. The method for monitoring an abnormal state according to claim 5, wherein the processing (S640) the abnormal state according to the processing scheme comprises:
determining (S641), in response to the processing scheme comprising the observation scheme, a collection strategy corresponding to the observation scheme;
collecting (S642) third scene information related to the abnormal state according to the collection strategy;
updating (S643) the state change chain of the abnormal state based on the third scene information;
updating (S644) the abnormality impact information of the abnormal state based on the updated state change chain;
updating (S645) the abnormality level of the abnormal state based on the updated abnormality impact information;
updating (S646) the processing scheme based on the updated abnormality impact information and the updated abnormality level; and
processing (S647) the abnormal state according to the updated processing scheme.

7. The method for monitoring an abnormal state according to claim 1, wherein before collecting (S100) the first scene information of the target scene, the method further comprises:
collecting (S1100), within a second time period, historical scene information within the target scene, wherein the second time period is a time period prior to the first time period, and duration of the second time period is longer than that of the first time period;
determining (S1200) a scene law of the target scene based on the historical scene information, wherein
the scene law comprises at least one of a spatial layout law, an object distribution law, an object activity law, and an object association law of the target scene; and
constructing (S1300) the reference scene information according to the scene law.

8. An apparatus (900) for monitoring an abnormal state of a scene, comprising:
a collection module (910), configured to collect first scene information and second scene information of a target scene, wherein the first scene information comprises scene information of the target scene that is collected within a current time period, and the second scene information comprises scene information of the target scene that is collected within a first time period prior to the current time period;
a memory module (920), configured to store reference scene information, wherein the reference scene information is pre-stored scene information corresponding to the target scene when the target scene is in a normal state;
a comparison module (930), configured to compare the first scene information with the reference scene information, to obtain an information difference value;
a first determining module (940), configured to determine, in a case where the information difference value is greater than or equal to a difference threshold, that an abnormal state exists in the target scene;
a second determining module (950), configured to determine current credibility of the abnormal state based on the first scene information and the second scene information; and
a processing module (960), configured to process the abnormal state in a case where the current credibility is greater than a credibility threshold.

9. The apparatus (900) for monitoring an abnormal state according to claim 8, wherein the collection module (910) is further configured to: in a case where the current credibility is less than or equal to the credibility threshold, collect supplementary scene information related to the abnormal state, wherein the supplementary scene information comprises scene information of the target scene that is collected after the current time period, and a collection strategy for the supplementary scene information is different from that for the first scene information.

10. The apparatus (900) for monitoring an abnormal state according to claim 9, wherein the second determining module (950) is further configured to: update the current credibility of the abnormal state based on the supplementary scene information.

11. The apparatus (900) for monitoring an abnormal state according to claim 10, wherein the processing module (960) is further configured to: process the abnormal state in a case where the updated current credibility is greater than the credibility threshold; and in a case where the updated current credibility is less than or equal to the credibility threshold, jump to the step of collecting supplementary scene information related to the abnormal state.

12. The apparatus (900) for monitoring an abnormal state according to claim 10, wherein the second determining module (950) is further configured to: update a state change chain of the abnormal state based on the supplementary scene information; obtain second definition of image information in the supplementary scene information; determine second rationality of a formation process of the abnormal state based on the updated state change chain; determine second accuracy of the supplementary scene information based on the second definition; and determine the current credibility based on the second rationality and the second accuracy.

13. The apparatus (900) for monitoring an abnormal state according to claim 12, wherein the processing module (960) is configured to: analyze the state change chain of the abnormal state to obtain abnormality impact information of the abnormal state, wherein the abnormality impact information is an impact range and an abnormal result of the abnormal state that are obtained by predicting the abnormal state; determine an abnormality level of the abnormal state based on the abnormality impact information; generate a processing scheme for the abnormal state based on the abnormality impact information and the abnormality level of the abnormal state, wherein the processing scheme comprises at least one of a prompting scheme, an observation scheme, and an intervention scheme; and process the abnormal state according to the processing scheme.

14. A computer readable storage medium, wherein the storage medium stores a computer program, and the computer program is used for implementing the method for monitoring an abnormal state of a scene according to any one of claims 1 to 7.

15. An electronic device (2000), comprising:
a processor (2100); and
a memory (2200), configured to store instructions executable by the processor (2100), wherein
the processor (2100) is configured to read the executable instructions from the memory (2200), and execute the instructions to implement the method for monitoring an abnormal state according to any one of claims 1 to 7.
